# EUROPÄISCHE PATENTANMELDUNG

(11) **EP 4 725 315 A1**
(43) Veröffentlichungstag der Anmeldung: **15.04.2026**
(21) Anmeldenummer: 24205676.0
(22) Anmeldetag: 09.10.2024
(51) Int. Cl.: A22B 3/02

(54) **BOLZENSCHUSSAPPARAT MIT AUTOMATISCHER SCHUSSBOLZENRÜCKFÜHRUNG**

(71) Anmelder: Freund Maschinenfabrik GmbH & Co. KG, 33106 Paderborn (DE)
(72) Erfinder: Eschenbeck, Peter, 33175 Bad Lippspringe (DE); Hahn, Hermann, 33106 Paderborn (DE); Yang, Chunqing, 33178 Borchen (DE)
(74) Vertreter: Wickord, Wiro

(57) **Zusammenfassung**

Die Erfindung betrifft einen Bolzenschussapparat (100) zur Betäubung von Schlachtvieh, umfassend ein Kartuschenlager (19), einen durch Zündung einer im Kartuschenlager (19) aufgenommenen Kartusche antreibbaren Schussbolzen (20) mit einem Bund (201) und mit einem Schaft (202), und umfassend einen von einem Führungsrohr (24) bereitgestellten Lauf, in welchem der Bund (201) des Schussbolzens (20) geführt ist und eine Vielzahl an axial aneinandergelegten, ringscheibenförmigen und um den Schaft (202) des Schussbolzens (20) herum angeordneten gummielastisch-federnden Rückholelementen (23) für eine automatische Rückführung des Schussbolzens (20) aufgenommen ist, wobei ein dem Kartuschenlager (19) gegenüberliegendes Mündungsende (35) des Laufs mit einem als Widerlager für die Rückholelemente (23) fungierenden Verschlussstück (27) verschlossen ist, wobei das Verschlussstück (27) eine Durchgangsbohrung (36) aufweist, durch die der Schaft (202) des Schussbolzens (20) abschnittsweise mit einer Austrittslänge hindurchführbar ist, wobei ein Außennenndurchmesser (A) der Rückholelemente (23) jeweils geringer ist als ein Laufnenndurchmesser (L) des Laufs, wobei die Rückholelemente (23) jeweils eine Nennhöhe (H) aufweisen, die wenigstens 30 % und maximal 45 % ihres Außennenndurchmessers (A) beträgt.

## Beschreibung

Die Erfindung betrifft einen Bolzenschussapparat zur Betäubung von Schlachtvieh mit einer automatischen Schussbolzenrückführung gemäß dem Oberbegriff des Patentanspruchs 1.

Demzufolge umfasst der Bolzenschussapparat ein Kartuschenlager, einen durch Zündung einer im Kartuschenlager aufgenommenen Kartusche antreibbaren Schussbolzen mit einem Bund und mit einem Schaft, und einen von einem Führungsrohr bereitgestellten Lauf, in welchem der Bund mit Schaft des Schussbolzens geführt ist und eine Vielzahl an axial aneinandergelegten, ringscheibenförmigen und um den Schaft des Schussbolzens herum angeordneten gummielastisch-federnden Rückholelementen für eine automatische Rückführung des Schussbolzens (automatische Schussbolzenrückführung) aufgenommen ist. Ein dem Kartuschenlager gegenüberliegendes Mündungsende des Laufs ist mit einem als Widerlager für die Rückholelemente fungierenden Verschlussstück verschlossen. Das Verschlussstück weist eine Durchgangsbohrung auf, durch die der Schaft des Schussbolzens abschnittsweise mit einer Austrittslänge hindurchführbar ist. Die Rückholelemente weisen jeweils einen Außennenndurchmesser auf, der geringer ist als ein Laufnenndurchmesser des Laufs.

Bolzenschussapparate kommen bei der Betäubung von Schlachtvieh zum Einsatz. Für die Betäubung wird der mit einer Kartusche mit Treibladung geladene Bolzenschussapparat mit seinem Mündungsende auf den Tierschädel der zu schlachtenden Tiere aufgesetzt und ausgelöst, wodurch der Schussbolzen aus dem Mündungsende heraus in den Tierschädel eingetrieben wird. Die Tiere brechen hierbei schlagartig zusammen und ändern dabei ihre Kopfhaltung. Es besteht insofern die Gefahr, dass der ausgetretene Schussbolzen in dem Tierschädel verklemmt und seine Rückholung erheblich verzögert oder verhindert wird. Der Bediener ist dann oftmals gezwungen den Bolzenschussapparat loszulassen, sodass dieser zusammen mit dem Tier zu Boden fallen und eine Unfallgefahr darstellen kann.

Gattungsgemäße Bolzenschussapparate mit einer automatischen Schussbolzenrückführung sehen daher im Lauf um den Schaft des Schussbolzens herum angeordnete gummielastische ringscheibenförmige Rückholelemente vor, um den Schussbolzen unverzüglich nach Auslösung des Bolzenschussapparates beziehungsweise Durchführung des Schusses aus dem gestanzten Tierschädel in den Lauf zurückzuziehen.

Derartige gummielastische Rückholelemente stellen im Stand der Technik gegenüber metallischen Druckfedern die mittlerweile etablierte und bevorzugte Lösung für die Rückholung des Schussbolzens dar, insbesondere weil metallische Druckfedern nach einer Anzahl abgegebener Schüsse gegenüber den gummielastischen Rückholelementen vorzeitig ermüden. Gleichwohl unterliegen auch die gummielastischen Rückholelemente im regelmäßigen Betrieb einem Verschleiß, insbesondere aufgrund der infolge jedes Schusses wirkenden Stauchung und Reibung gegenüber dem Lauf und einer Erwärmung infolge eines Dauerbetriebs beziehungsweise einer hohen Schusszahl pro Tag.

Es ist daher ein lange bestehendes und mithin fortwährendes Bedürfnis, die Lebensdauer der eingesetzten Rückholelemente bezogen auf die Schusszahl zu verlängern. Diesbezüglich besteht im Stand der Technik eine Vielzahl an unterschiedlichen Lösungsansätzen.

Ein rationaler Lösungsansatz besteht darin, ein für die Anforderungen in gattungsgemäßen Bolzenschussapparaten besonders geeignetes elastomeres Material für die gummielastischen Rückholelemente zu entwickeln.

Ein unter anderem in der DE 296 22 140 U1 vorgeschlagener Ansatz besteht darin, gummielastische Rückholelemente mit einer unterschiedlichen Shore-Härte im Lauf des Bolzenschussapparats vorzusehen.

Die DE 2163409 A benennt als Stand der Technik den Ansatz, das den Lauf bildende Führungsrohr mit Austrittsöffnungen zu versehen, die mit der Atmosphäre in Verbindung stehen, um nach der anfänglichen Beschleunigung einen Druckabfall auf den Schlagbolzen zu bewirken.

Die DE 2163409 A selbst offenbart den Ansatz, einen von dem Kartuschenlager aus gesehen vor dem Bund des Schussbolzens angeordneten Kompressionsraum mit einem hinter dem Bund angeordneten Kompressionsraum über einen Einströmkanal zu verbinden, wobei der Einströmkanal von einem beschleunigungsabhängig betätigbaren ersten Ventil verschließbar ist und wobei der Kompressionsraum über ein beschleunigungsabhängig betätigbares zweites Ventil mit der Atmosphäre verbunden ist.

In den bekannten gattungsgemäßen Bolzenschussapparaten kommen seit vielen Jahren mehrere um den Schaft des Schussbolzens axial aneinandergelegte, gummielastische Rückholelemente in Ringscheibenform zum Einsatz. Diese Rückholelemente weisen seit langer Zeit unverändert jeweils eine Nennhöhe auf, die im Regelfall wenigstens 50 % des Außennenndurchmessers der Rückholelemente beträgt beziehungsweise größer gleich dem Außennennradius der Rückholelemente ist.

Bolzenschussapparate mit derart bemessenen Rückholelementen sind unter anderem in folgenden Dokumenten offenbart:
- Karl Schermer GmbH & Co. KG: Gebrauchsanleitung und technische Beschreibung für die SCHERMER Viehschussapparate Baureihe K, Stand Juni 2009,
- Fa. Schmid & Wezel: Betriebsanleitung zum Bolzenschussapparat "EFA CASH MAGNUM 9000 S", Stand April 2006 und
- Fa. Termet: Benutzerhandbuch Version M, zum MATADOR Super Securit 3000, Stand Dezember 2020.

Obwohl es ein möglicher Lösungsansatz ist, die Bemessungen der Rückholelemente anzupassen, ist diesem Lösungsansatz trotz des ständigen Bedürfnisses nach einer Verbesserung der Schussperformance seit vielen Jahren keiner der bekannten Hersteller von Bolzenschussapparaten nachgegangen und die verfolgten Lösungsansätze gingen wie zuvor geschildert in andere Richtungen.

Aufgabe der vorliegenden Erfindung ist es, einen in Bezug auf die Schussleistung verbesserten Bolzenschussapparat zur Betäubung von Schlachtvieh mit einer automatischen Schussbolzenrückführung anzugeben.

Die vorliegende Erfindung ist das Ergebnis von anmelderseitig durchgeführten Versuchen, die von den bisher im Stand der Technik verfolgten Lösungsansätzen abweichen und welche die Belastung von Rückholelementen im Praxiseinsatz in Bolzenschussapparaten nachgebildet haben. Die Versuche haben gezeigt, dass die Abmessungen der Nennhöhe, das heißt der Höhe der Rückholelemente im unbelasteten Zustand, in einem bestimmten Verhältnis zum Außennenndurchmesser der scheibenförmigen Rückholelemente liegen müssen. Überraschenderweise stellte sich dabei heraus, dass eine Reduzierung der Nennhöhe der Rückholelemente sich positiver auf eine Reduzierung der Reibung zwischen dem Führungsrohr und den Rückholelementen auswirkt als beispielsweise eine Geometrieanpassung, beispielsweise eine konkave Formung, der Außenmantelfläche der Rückholelemente.

Im Kontext der Erfindung genannte Nennmaße beziehen sich auf den unbelasteten Zustand beziehungsweise Ruhezustand.

Zur Lösung der Aufgabe ist die Erfindung in Verbindung mit dem Oberbegriff des Patentanspruchs 1 dadurch gekennzeichnet, dass die Rückholelemente jeweils eine Nennhöhe aufweisen, die wenigstens 30 % und maximal 45 % ihres Außennenndurchmessers beträgt.

Dieser erfindungsgemäß vorgeschlagene Bereich für die Bemessung der Rückholelemente ist das überraschende Ergebnis diverser anmelderseitig durchgeführter Versuchsreihen. Bei einer zu geringen Nennhöhe außerhalb des vorgeschlagenen Bereichs besteht die Gefahr, dass die Rückholelemente mit der Anzahl an Schussabgaben aufreißen und insofern frühzeitig zu ersetzen sind. Bei einer zu großen Nennhöhe außerhalb des vorgeschlagenen Bereichs bestehen die aus dem Stand der Technik bekannten Probleme einer erhöhten Reibung zwischen dem Führungsrohr und den Rückholelementen.

Der besondere Vorteil der Erfindung besteht darin, dass durch die vorgeschlagene spezifische Bemessung der Rückholelemente die Reibung zwischen der Wandung des Führungsrohrs beziehungsweise Laufs auf konstruktive einfache Weise reduziert werden kann, wodurch sich die Lebensdauer der Rückholelemente und die Schussleistung des Bolzenschussapparats jeweils erhöhen, das Paket an Rückholelementen ein verbessertes Rückholvermögen zeigt und sich im Lauf die Wärmeentwicklung reduziert. Vorteilhaft können hierdurch eine höhere Anzahl an Betäubungen pro Tag durchgeführt werden, und bei gleichbleibender Schussleistung kleinere Kartuschen verwendet werden beziehungsweise der Bolzenschussapparat mit einer geringeren Wandstärke beziehungsweise mit einem geringeren Bauvolumen hergestellt werden.

Gemäß einer bevorzugten Ausführungsform der Erfindung beträgt die Nennhöhe der Rückholelemente wenigstens 35 % und maximal 40 %, bevorzugt wenigstens 37,5 % und maximal 38,5 % und besonders bevorzugt 38 % ihres Außennenndurchmessers. Dieses Verhältnis von Nennhöhe zu Außennenndurchmesser der Rückholelemente hat sich in anmelderseitig durchgeführten Versuchen als besonders vorteilhaft dargestellt.

Nach einer Weiterbildung der Erfindung ist ein Außennenndurchmesser der Rückholelemente um den Faktor zwei größer als ein Innennenndurchmesser der Rückholelemente.

Nach einer Weiterbildung der Erfindung weisen die Rückholelemente in dem Übergangsbereich zwischen einander gegenüberliegenden ebenen Stirnseiten und einer die Stirnseiten verbindenden Außenmantelfläche jeweils eine Fase auf. Eine Fasennennlänge der Fasen beträgt wenigstens 15 % und maximal 25 % und besonders bevorzugt 21 % der Nennhöhe der Rückholelemente.

Nach einer Weiterbildung der Erfindung sind die Rückholelemente mit einer axialen Vorspannung an dem Schaft des Schussbolzens vormontiert. Vorteilhaft liegen die Rückholelemente dabei flächig im Bereich einander zugewandter Stirnflächen aneinander an, wodurch bei Schussabgabe durch den aufschlagenden Schussbolzen eine definiert gerichtete Krafteinwirkung auf das Paket an Rückholelementen erfolgt.

Das Paket mit der Vielzahl an dem Schaft des Schussbolzens angeordneten Rückholelementen ist dabei vorzugsweise axial zwischen zwei ebenfalls an dem Schaft des Schussbolzens angeordneten Gummischeiben angeordnet. Die Gummischeiben sind vorzugsweise aus einem härteren, weniger federnd-elastischen Material wie die Rückholelemente hergestellt. Die Gummipuffer verhindern einerseits einen direkten Kontakt beziehungsweise Reibung der äußeren Rückholelemente mit dem Bund des Schussbolzens beziehungsweise mit dem Verschlussstück am Mündungsende des Laufs und andererseits dämpfen sie die Belastung infolge des nach Schussabgabe aufschlagenden Schussbolzens etwas ab.

Nach einer Weiterbildung der Erfindung weist der Lauf zum Mündungsende hin eine konische Laufaufweitung auf. Die Laufaufweitung verschafft den Rückholelementen einen größeren Raum für eine Querkontraktion infolge des aufschlagenden Schussbolzens und reduziert somit gegenüber einem Lauf mit einem konstanten Laufnenndurchmesser die Reibung zwischen der Wandung des Führungsrohrs und den Rückholelementen und damit die Wärmeentwicklung.

Gemäß einer vorteilhaften Ausführungsform der Erfindung erstreckt sich die Laufaufweitung des Laufs über ein Drittel der Lauflänge des Laufs. Die mündungsseitige Laufaufweitung stellt einen zusätzlichen Freiraum für die Querkontraktion der Rückholelemente nach der Schussabgabe bereit und sorgt für eine reduzierte Reibung der im Bereich der Laufaufweitung angeordneten Rückholelemente gegenüber der Wandung des Führungsrohrs und für einen verbesserten Gasaustritt nach dem Auslösen des Bolzenschussapparats beziehungsweise der Schussabgabe. Hierdurch ist die Erwärmung im Bereich des Mündungsendes reduziert.

Nach einer Weiterbildung der Erfindung sind die Rückholelemente aus einem zelligen Polyurethan-Elastomer hergestellt. Ein besonders vorteilhaftes Material für die Rückholelemente ist Vulkocell^{®}, besonders bevorzugt Vulkocell^{®} - NH24-70, oder ein Material mit vergleichbaren mechanischen Eigenschaften. Vulkocell^{®} ist ein zelliges Elastomer auf Polyurethan-Basis. Es weist eine hohe Volumenkompressabilität bei geringer Querdehnung auf. Das Vulkocell^{®} - NH24-70 weist eine Rohdichte von 700 kg/m³ und eine Stoßelastizität nach DIN53512 von 60 % auf.

Die Rückholelemente sind vorteilhaft derart hergestellt, dass diese jeweils von einer ringzylindrischen Stange abgetrennt sind, wobei Trennflächen die Stirnflächen ausbilden. Vorteilhaft sorgt dieses Abtrennen beziehungsweise Abschneiden der einzelnen Rückholelemente von einem ringzylindrischen Grundkörper dafür, dass die dabei als Trenn- beziehungsweise Schnittflächen gebildeten Stirnflächen besonders offenporig ausgeführt sind und beispielsweise gegenüber einer Herstellung der einzelnen Rückholelemente im Spritzgussverfahren besser ausatmen können. Diese verbesserte Offenporigkeit der Stirnflächen sorgt dafür, dass zwischen den Rückholelementen eine Luftpolsterbildung stattfindet, wodurch die Rückholelemente bei Schussabgabe weniger laut aneinanderschlagen und die Wärmeentwicklung reduziert ist.

Gemäß einer vorteilhaften Ausführungsform der Erfindung erstreckt sich die Vielzahl an axial aneinandergelegten Rückholelementen über wenigstens 80 % und bevorzugt wenigstens 90 % einer Schaftlänge des Schafts des Schussbolzens.

Gemäß einer vorteilhaften Ausführungsform der Erfindung weist die Schaftlänge des Schussbolzens wenigstens 150 mm auf und die Vielzahl an Rückholelementen umfasst wenigstens 16 Rückholelemente.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter. Es zeigen:
- Fig. 1: ein erstes Ausführungsbeispiel eines erfindungsgemäßen Bolzenschussapparats in einer Einzelansicht,
- Fig. 2: den erfindungsgemäßen Bolzenschussapparat nach Fig. 1 im Vollschnitt,
- Fig. 3: ein zweites Ausführungsbeispiel eines erfindungsgemäßen Bolzenschussapparats in einer Einzelansicht,

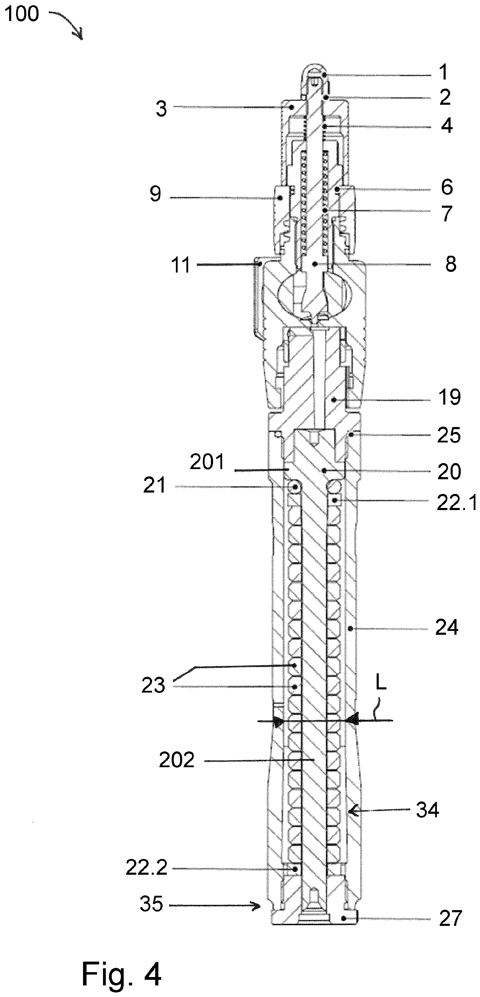

- Fig. 4: den erfindungsgemäßen Bolzenschussapparat nach Fig. 3 im Vollschnitt,
- Fig. 5: eine perspektivische Einzelansicht eines Rückholelements für einen erfindungsgemäßen Bolzenschussapparat,
- Fig. 6: das Rückholelement nach Fig. 5 in einer Draufsicht und
- Fig. 7: das Rückholelement nach Fig. 5 im Vollschnitt entlang der Schnittlinie Z-Z nach Fig. 6.

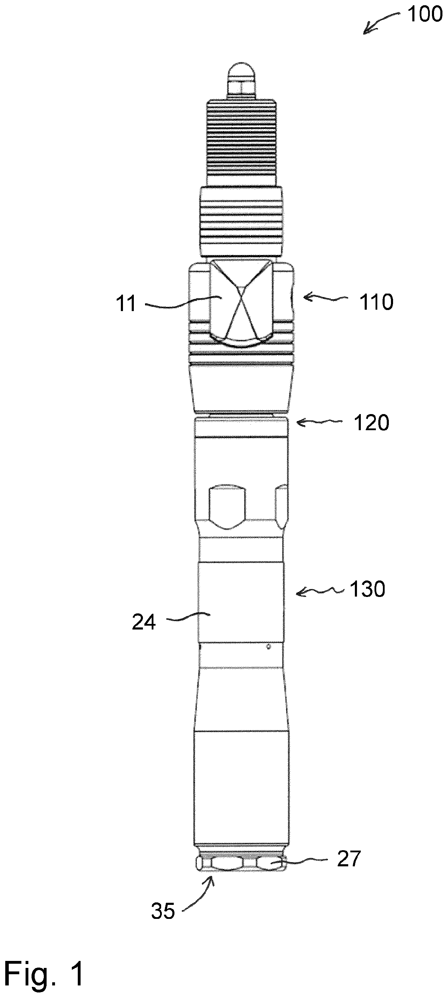

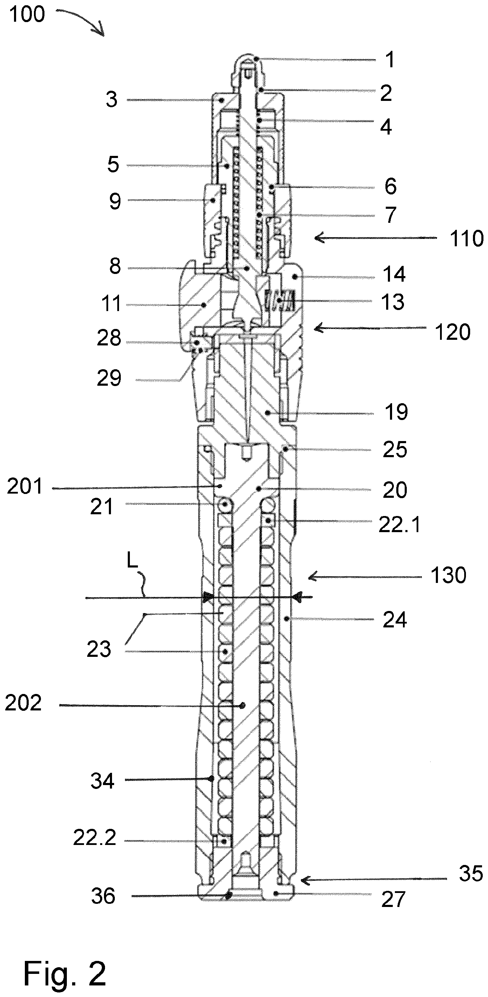

Ein erstes Ausführungsbeispiel eines erfindungsgemäßen Bolzenschussapparats 100 zur Betäubung von Schlachtvieh mit einer automatischen Schussbolzenrückführung ist in den Fig. 1 und 2 angegeben.

Der Bolzenschussapparat 100 weist einen an sich bekannten stabförmigen Grundaufbau mit einem Verschlusskopf 110, einer sich daran anschließenden Kartuschenaufnahme 120 und einer sich daran anschließenden Schussbolzenführung 130 auf.

In dem Verschlusskopf 110 ist ein über eine Zündbolzenfeder 7 spannbarer Zündbolzen 8 axial verschiebbar geführt. Der Zündbolzen 8 und die um diesen herum angeordnete Zündbolzenfeder 7 sind in einer rotations-hohlkörperförmigen Zündbolzenführung 5 aufgenommen. Der Zündbolzen 8 ragt beidseitig axial aus der Zündbolzenführung 5 heraus.

Ein überstehender erster Axialendabschnitt des Zündbolzens 8 ist in einer auf die Zündbolzenführung 5 aufgesetzten Zündbolzenschutzkappe 3 geführt, wobei in der Zündbolzenschutzkappe 3 eine Zündbolzenentlastungsfeder 4 aufgenommen ist. Auf die Zündschutzkappe 3 ist eine Hutmutter 1 aufgeschraubt, welche den ersten Axialendabschnitt des Zündbolzens 8 endseitig verschließt. Axial zwischen Hutmutter 1 und Zündschutzkappe 3 ist eine Fächerscheibe 2 vorgesehen.

Ein zweiter Axialendabschnitt des Zündbolzens 8 steht axial gegenüber der Zündbolzenführung 5 hervor und mündet in ein die Zündbolzenführung abschnittsweise radial umschließendes Verschlusskopfgehäuse 14. Ein Sicherungsring 9 ist mit dem Verschlusskopfgehäuse 9 verschraubt. In dem Verschlusskopfgehäuse 9 ist im Anschluss an die Zündbolzenführung 5 eine Auslöseeinheit mit einem gegen eine Abzughebelfeder 13 radial verschiebbaren Abzughebel 11 aufgenommen. Der Abzughebel 11 ist funktional mit einem gegen eine Auslösesperrstiftfeder 29 radial verschiebbaren Auslösesperrstift 28 verbunden. Der Auslösesperrstift 28 wird von der Auslösesperrstiftfeder 29 in einer Ruhestellung gehalten, in welcher der Auslösesperrstift 28 ein unbeabsichtigtes Auslösen des Bolzenschussapparats 100 beim Aufsetzen des Verschlusskopfs 110 verhindert. Ein Axialende des zweiten Axialabschnitts des Zündbolzens 8 weist eine hervorstehende Spitze auf, welche in die Kartuschenaufnahme 120 mündet.

Die Kartuschenaufnahme 120 umfasst ein Kartuschenlager 19, in welchem eine Aufnahmeöffnung zur Aufnahme einer mit einer Treibladung gefüllten Kartusche vorgesehen ist. Die Aufnahmeöffnung ist koaxial zu dem Zündbolzen 8 angeordnet.

An das Kartuschenlager 19 schließt sich axial ein im Wesentlichen hohlzylindrisches Führungsrohr 24 an, welches einen Lauf für einen darin aufgenommenen und axial verschiebbar geführten Schlagbolzen 20 bereitstellt und die Schussbolzenführung 130 bildet. Der Schussbolzen 20 ist dabei mit einem Bund 201 in dem Lauf geführt und weist einen von dem Bund 201 axial abragenden Schaft 202 auf. Ein dem Kartuschenlager 19 axial gegenüberliegendes Mündungsende 35 des Laufs beziehungsweise Führungsrohrs 24 ist mit einem Verschlussstück 27 verschraubt. Das Verschlussstück 27 weist eine zentrische Durchgangsbohrung 36, durch die der Schaft 202 des Schussbolzens 20 nach der Zündung der Kartusche mit einer Austrittslänge abschnittsweise zum Betäuben des Schlachtviehs herausschnellen kann.

In dem Lauf ist eine Vielzahl an hier insgesamt sechzehn axial aneinandergelegten ringscheibenförmigen Rückholelementen 23 aufgenommen. Die Rückholelemente 23 sind jeweils aus einem federnden, gummielastischen Material hergestellt und umschließen den Schaft 202 des Schussbolzens 20 radial. Dieses Paket aus einer Vielzahl von in einer Reihenschaltung angeordneten federnd-gummielastischen Rückholelementen 23 bildet eine automatische Rückholführung für den Schussbolzen 20, die dafür sorgt, dass der Schussbolzen 20 nach der Schussabgabe wieder automatisch zur vollständigen Aufnahme in den Lauf zurückgeführt wird. Das Verschlussstück 27 bildet hierfür ein Widerlager für die federnden Rückholelemente 27.

Um die Rückholelemente 27 vor einer zu hohen Belastung und damit einem vorzeitigen Verschleiß zu schützen, ist das Paket an Rückholelementen 23 axial zwischen zwei Gummischeiben 22.1, 22.2 angeordnet. Eine erste Gummischeibe 22.1 ist dabei zwischen einem sich an den Bund 201 des Schussbolzens 20 anschließenden O-Ring 21 und einem ersten äußersten Rückholelement 23 angeordnet. Eine zweite Gummischeibe 22.2 ist zwischen dem Verschlussstück 27 und einem zweiten äußersten Rückholelement 23 angeordnet. Über das Verschlussstück 27 ist dabei eine axiale Vorspannkraft auf die Rückholelemente 23 aufbringbar.

Der Lauf weist zunächst vom Kartuschenlager 19 zugewandten Ende ausgehend einen konstanten Laufnenndurchmesser L auf und weist dann zum Mündungsende 35 hin eine konische Laufaufweitung 34 auf, die sich zirka über ein Drittel einer Lauflänge des Laufs erstreckt.

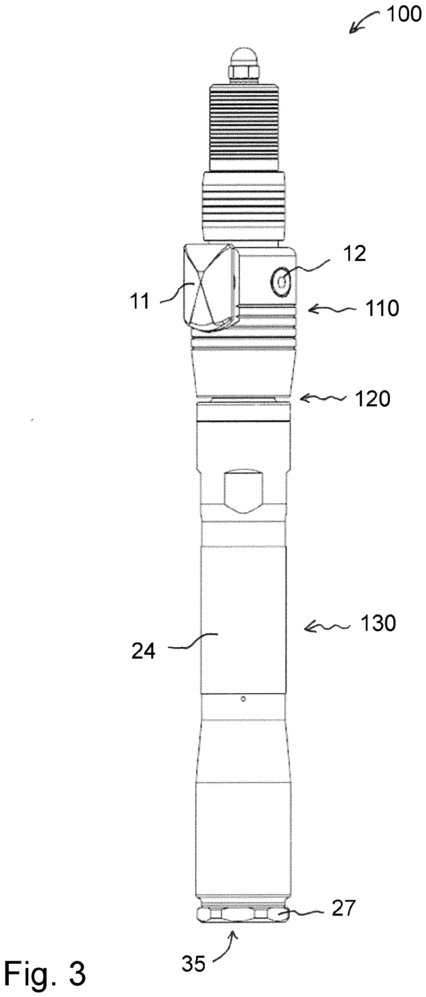

Das zweite Ausführungsbeispiel eines erfindungsgemäßen Bolzenschussapparats 100 nach Fig. 3 weist den gleichen Grundaufbau auf, wie der Bolzenschussapparat nach Fig. 1 mit dem Unterschied, dass das Führungsrohr 24 in dem Ausführungsbeispiel nach Fig. 3 länger ist, wodurch die Lauflänge des Laufs vergrößert ist. Entsprechend weist der Schussbolzen 20 hier einen verlängerten Schaft 202 auf und die automatische Schussbolzenrückführung sieht hier ein Paket mit insgesamt zwanzig axial aneinandergelegten und den Schaft 202 des Schussbolzens 20 wie gehabt radial umschließenden federnd-gummielastischen, ringscheibenförmigen Rückholelementen 23 vor.

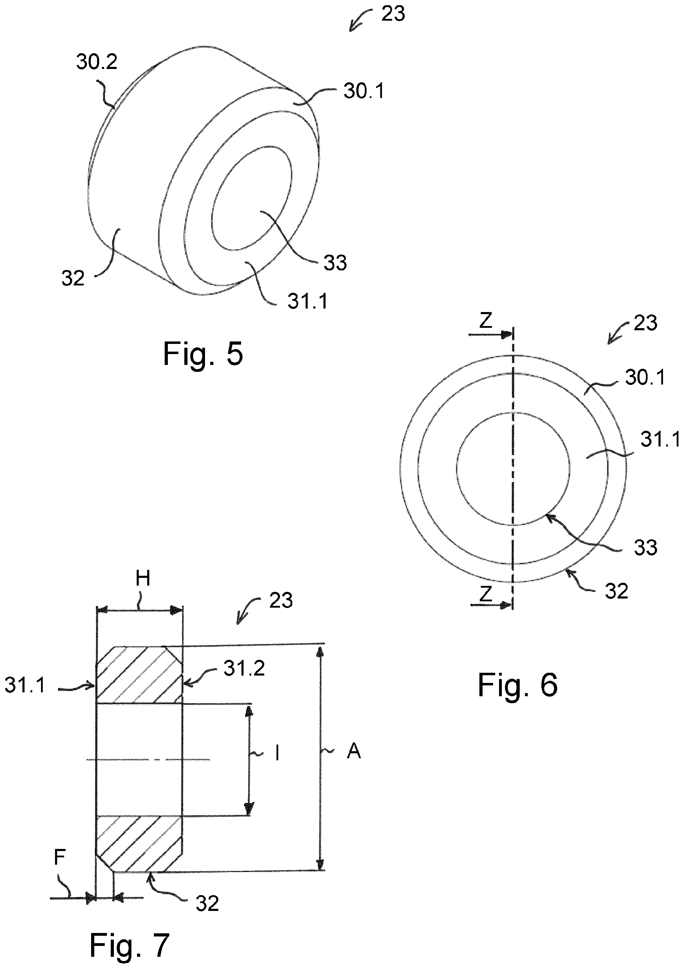

Die einzelnen Rückholelemente 23 sind in den Ausführungsbeispielen nach Fig. 1 und Fig. 3 jeweils gleich ausgeführt. Einzelansichten eines Rückholelements 23 geben die Fig. 5 bis 7 an.

Das Rückholelement 23 weist eine ringscheibenförmige Grundform auf, mit zwei einander im Abstand einer Nennhöhe H des Rückholelements 23 parallel und deckungsgleich beziehungsweise koaxial gegenüberliegenden, ebenen Stirnflächen 31.1, 31.2, mit einer zylindrischen Außenmantelfläche 32, welche einen Außennenndurchmesser A für das Rückholelement 23 definiert, und mit einer zylindrischen Innenmantelfläche 33, welche einen Innennenndurchmesser I für das Rückholelement 23 definiert. Das Rückholelement 23 weist zudem in einem Übergangsbereich zwischen der Außenmantelfläche 32 und den Stirnflächen 31.1, 31.2 jeweils eine Fase 30.1, 30.2 mit einer für beide Fasen 30.1, 30.2 gleichen Fasennennlänge F auf.

Eine für die vorliegende Erfindung wesentliche Besonderheit des Rückholelements 23 besteht in der gegenüber den bekannten Rückholelementen deutlich reduzierten Nennhöhe H. Das erfindungsgemäß für den Bolzenschussapparat 100 vorgeschlagene Rückholelement 23 weist eine Nennhöhe H auf, die wenigstens 30 % und maximal 45 % des Außennenndurchmessers A des Rückholelements 23 beträgt. Die Figuren sind diesbezüglich schematisch und nicht maßstabsgetreu beziehungsweise einschränkend zu verstehen.

Ein besonders bevorzugtes Ausführungsbeispiel eines erfindungsgemäßen Bolzenschussapparats 100 sieht einen Laufnenndurchmesser L von zirka 30 mm und für den Schaft 102 des Schussbolzens 20 einen Schaftnenndurchmesser von zirka 12 mm vor. Die für dieses Ausführungsbeispiel bevorzugt vorgesehenen Rückholelemente 23 weisen jeweils einen Laufnenndurchmesser A von zirka 25 mm, einen Innennenndurchmesser von zirka 12,5 mm und eine Nennhöhe H von zirka 9,5 mm auf. Die Fasen 30.1, 30.2 weisen dabei bevorzugt jeweils eine Fasennennlänge F von zirka 2 mm und einen Fasenwinkel von zirka 45° auf. Demzufolge beträgt in diesem bevorzugten Ausführungsbeispiel die Nennhöhe H der Rückholelemente 23 zirka 31,7 % des Außennenndurchmessers A. Weiter erstrecken sich die Fasen 30.1, 30.2 über zirka 42,1 % der Nennhöhe H.

Diese nach der vorliegenden Erfindung vorgeschlagenen Bemessungen für die Rückholelemente 23 unterscheiden sich deutlich von denjenigen für die bislang in gattungsgemäßen Bolzenschussapparaten 100 zum Einsatz kommenden ringscheibenförmigen und gummielastischen Rückholelementen 23. Bei den bekannten gattungsgemäßen Bolzenschussapparaten 100 beträgt die Nennhöhe H der Rückholelemente 23 jeweils mehr als 50 % ihres Außennenndurchmessers A, oder mit anderen Worten ist dort die Nennhöhe H größer als deren Außennennradius gewählt. Ferner erstrecken sich bei den bislang in gattungsgemäßen Bolzenschussapparaten 100 verwendeten Rückholelementen 23 die Fasen 30.1, 30.2 über maximal 25 %, meist weniger als 20 % der Nennhöhe H der Rückholelemente 23.

Vorteilhaft ergibt sich durch die erfindungsgemäß vorgeschlagene Bemessung der Rückholelemente 23 eine Vielzahl vorteilhafter technischer Effekte:
- Die Rückholelemente 23 bilden bei der axialen Kompression infolge des aufschlagenden Schussbolzens 20 eine reduzierte seitliche Wulst beziehungsweise Balligkeit aus;
- Die Reibung gegenüber dem Führungsrohr 24 ist dadurch reduziert;
- Die Rückholelemente 23 unterliegen damit einem reduzierten Verschleiß und müssen nicht mehr so häufig gewechselt werden;
- Es geht weniger Schussleistung durch Reibung verloren beziehungsweise die Schussperformance erhöht sich;
- Das Rückstellvermögen beziehungsweise die Federwirkung der Rückholelemente 23 ist aufgrund der reduzierten Reibung verbessert;
- Es entsteht durch die reduzierte Reibung weniger Wärme, wodurch eine höhere Schussanzahl pro Tag erreicht werden kann;
- Es können aufgrund der durch die reduzierte Reibung erhöhten Schussleistung kleinere Kartuschen mit einer geringeren Treibladung verwendet werden;
- Der Bolzenschussapparat 100 kann mit einem reduzierten Bauvolumen beziehungsweise mit reduzierten Wandstärken hergestellt werden.

Die Erfindung ist nicht auf die figürlich dargestellten Ausführungsbeispiele beschränkt.

Gleiche Bauteile und Bauteilfunktionen sind durch gleiche Bezugszeichen gekennzeichnet.

### Bezugszeichenliste

- 1: Hutmutter
- 2: Fächerscheibe
- 3: Zündbolzenschutzkappe
- 4: Zündbolzenentlastungsfeder
- 5: Zündbolzenführung
- 6: O-Ring
- 7: Zündbolzenfeder
- 8: Zündbolzen
- 9: Sicherungsring
- 10: O-Ring
- 11: Abzugshebel
- 12: Führungsschraube
- 13: Abzugshebelfeder
- 14: Verschlusskopfgehäuse
- 19: Kartuschenlager
- 20: Schussbolzen
- 21: O-Ring
- 22.1: Gummischeibe
- 22.2: Gummischeibe
- 23: Rückholelement
- 24: Führungsrohr
- 27: Verschlussstück
- 28: Auslösesperrstift
- 29: Auslösesperrstiftfeder
- 30.1: Fase
- 30.2: Fase
- 31.1: Stirnfläche
- 31.2: Stirnfläche
- 32: Außenmantelfläche
- 33: Innenmantelfläche
- 34: Laufaufweitung
- 35: Mündungsende
- 36: Durchgangsbohrung
- 100: Bolzenschussapparat
- 110: Verschlusskopf
- 120: Kartuschenaufnahme
- 130: Schussbolzenführung
- 201: Bund
- 202: Schaft
- A: Außennenndurchmesser
- F: Fasennennlänge
- H: Nennhöhe
- I: Innennenndurchmesser
- L: Laufnenndurchmesser

## Patentansprüche

1. Bolzenschussapparat (100) zur Betäubung von Schlachtvieh, umfassend ein Kartuschenlager (19), einen durch Zündung einer im Kartuschenlager (19) aufgenommenen Kartusche antreibbaren Schussbolzen (20) mit einem Bund (201) und mit einem Schaft (202), und umfassend einen von einem Führungsrohr (24) bereitgestellten Lauf, in welchem der Bund (201) des Schussbolzens (20) geführt ist und eine Vielzahl an axial aneinandergelegten, ringscheibenförmigen und um den Schaft (202) des Schussbolzens (20) herum angeordneten gummielastisch-federnden Rückholelementen (23) für eine automatische Rückführung des Schussbolzens (20) aufgenommen ist, wobei ein dem Kartuschenlager (19) gegenüberliegendes Mündungsende (35) des Laufs mit einem als Widerlager für die Rückholelemente (23) fungierenden Verschlussstück (27) verschlossen ist, wobei das Verschlussstück (27) eine Durchgangsbohrung (36) aufweist, durch die der Schaft (202) des Schussbolzens (20) abschnittsweise mit einer Austrittslänge hindurchführbar ist, wobei ein Außennenndurchmesser (A) der Rückholelemente (23) jeweils geringer ist als ein Laufnenndurchmesser (L) des Laufs, **dadurch gekennzeichnet, dass** die Rückholelemente (23) jeweils eine Nennhöhe (H) aufweisen, die wenigstens 30 % und maximal 45 % ihres Außennenndurchmessers (A) beträgt.

2. Bolzenschussapparat (100) nach Anspruch 1, **dadurch gekennzeichnet, dass** die Nennhöhe (H) der Rückholelemente (23) wenigstens 35 % und maximal 40 %, bevorzugt wenigstens 37,5 % und maximal 38,5 % und besonders bevorzugt 38 % ihres Außennenndurchmessers (A) beträgt.

3. Bolzenschussapparat (100) nach Anspruch 1 oder 2, **dadurch gekennzeichnet, dass** ein Außennenndurchmesser (A) der Rückholelemente (23) um den Faktor zwei größer ist als ein Innennenndurchmesser (I) der Rückholelemente 23.

4. Bolzenschussapparat (100) nach einem der Ansprüche 1 bis 3, **dadurch gekennzeichnet, dass** die Rückholelemente (23) in einem Übergangsbereich zwischen einander gegenüberliegenden ebenen Stirnflächen (31.1, 31.2) und einer die Stirnflächen (31.1, 31.2) verbindenden Außenmantelfläche (32) jeweils eine Fase (30.1, 30.2) aufweisen, wobei eine Fasennennlänge (F) der Fasen (30.1, 30.2) wenigstens 15 % und maximal 25 % und besonders bevorzugt 21 % der Nennhöhe (H) beträgt.

5. Bolzenschussapparat (100) nach Anspruch 4, **dadurch gekennzeichnet, dass** die Rückholelemente (23) in einem Übergangsbereich zwischen den Stirnflächen (31.1, 31.2) und einer die Stirnflächen (31.1, 31.2) verbindenden Innenmantelfläche (33) jeweils eine Innenfase aufweisen, wobei eine Innenfasennennlänge der Innenfasen wenigstens 15 % und maximal 25 % und besonders bevorzugt 21 % der Nennhöhe (H) beträgt.

6. Bolzenschussapparat (100) nach Anspruch 4 oder 5, **dadurch gekennzeichnet, dass** die Fasen (30.1, 30.2) eine Fasennennlänge (F) von 2 mm und einen Fasenwinkel von 45° und/oder die Innenfasen eine Innenfasennennlänge von 2 mm und einen Innenfasenwinkel von 45° aufweisen.

7. Bolzenschussapparat (100) nach einem der Ansprüche 1 bis 6, **dadurch gekennzeichnet, dass** die Rückholelemente (23) mit einer axialen Vorspannung an dem Schaft (202) des Schussbolzens (20) vormontiert sind.

8. Bolzenschussapparat (100) nach einem der Ansprüche 1 bis 7, **dadurch gekennzeichnet, dass** der Lauf zum Mündungsende (35) hin eine konische Laufaufweitung (34) aufweist und/oder dass sich die konische Laufaufweitung (34) des Laufs über zirka ein Drittel einer Lauflänge des Laufs erstreckt.

9. Bolzenschussapparat (100) nach einem der Ansprüche 1 bis 8, **dadurch gekennzeichnet, dass** die Rückholelemente (23) aus einem zelligen Polyurethan-Elastomer hergestellt sind.

10. Bolzenschussapparat (100) nach Anspruch 9, **dadurch gekennzeichnet, dass** die Rückholelemente (23) aus Vulkocell^{®} und besonders bevorzugt aus Vulkocell^{®} - NH24-70 hergestellt sind.

11. Bolzenschussapparat (100) nach einem der Ansprüche 1 bis 10, **dadurch gekennzeichnet, dass** die Rückholelemente (23) derart hergestellt sind, dass diese jeweils von einer ringzylindrischen Stange abgetrennt sind, wobei Trennflächen die Stirnflächen (31.1, 31.2) ausbilden.
